# EUROPEAN PATENT APPLICATION

(11) **EP 4 549 131 A1**
(43) Date of publication of application: **07.05.2025**
(21) Application number: 23831143.5
(22) Date of filing: 16.06.2023
(51) Int. Cl.: B29C 64/112, B29C 64/314, B29C 64/40, B33Y 10/00, B33Y 70/00

(54) **METHOD FOR MANUFACTURING THREE-DIMENSIONAL OBJECT AND INK SET FOR MANUFACTURING THREE-DIMENSIONAL OBJECT**

(30) Priority: 30.06.2022 JP 2022106148
(71) Applicant: OSAKA UNIVERSITY, Suita-shi Osaka 565-0871 (JP); NAGASE CHEMTEX CORPORATION, Osaka-shi, Osaka 550-8668 (JP)
(72) Inventor: SAKAI, Shinji, Suita-shi, Osaka 565-0871 (JP); KOTANI, Takashi, Suita-shi, Osaka 565-0871 (JP); NAGANO, Toyohiro, Tatsuno-shi, Hyogo 679-4124 (JP); NAKAMURA, Daisuke, Tatsuno-shi, Hyogo 679-4124 (JP)
(74) Representative: Klöckner, Christoph
(86) International application number: PCT/JP2023/022340
(87) International publication number: WO 2024/004696

(57) **Abstract**

The present invention provides a method for producing a three-dimensional object and an ink set for producing a three-dimensional object which can even produce, for example, a complex-shaped three-dimensional object made of a soft material with good fabrication accuracy. The present invention relates to a method for producing a three-dimensional object, including: individually discharging (a) a model material ink containing a crosslinkable polymer and (b) a support material ink containing a support material; and removing an object of the support material ink after the crosslinkable polymer is crosslinked, wherein one of the model material ink (a) and the support material ink (b) further contains a hydrogen peroxide decomposer and the other of the model and support material inks further contains hydrogen peroxide or a hydrogen peroxide donor, and the discharged hydrogen peroxide decomposer decomposes the discharged hydrogen peroxide to crosslink the crosslinkable polymer, thereby fabricating a three-dimensional object.

## Description

### TECHNICAL FIELD

The present invention relates to a method for producing a three-dimensional object and an ink set for producing a three-dimensional object. The present invention particularly relates to a method for producing a three-dimensional object, which is suitable for producing a complex-shaped three-dimensional object made of a soft material in regenerative medicine and other fields.

### BACKGROUND ART

Technologies for producing three-dimensional objects using fabrication devices called 3D printers have been studied with a view to practical use in various fields. For example, in the field of regenerative medicine, there is a need to produce complex-shaped three-dimensional objects with bridges or holes made of soft materials for use as artificial organs. When such a three-dimensional object is to be produced from a bioink using a 3D printer, the bioink may flow out (drip), resulting in collapse before gelling, or deformation may occur under gravity. Thus, there is a need for improved fabrication accuracy.

Patent Literature 1 discloses that, with a view to application in regenerative medicine and other fields, a silk nanofiber may be added to an ink for 3D printing systems containing a natural polymer and/or a synthetic polymer to allow the ink to have a low viscosity when discharged from a nozzle so that it can be discharged at a lower pressure, and also to allow the ink to have a high viscosity on the printed substrate so that deformation of the object can be sufficiently prevented. Meanwhile, there has been a desire to further expand the range of materials and develop new methods for producing three-dimensional objects.

### CITATION LIST

### - Patent Literature

Patent Literature 1: JP 2020-156357 A

### SUMMARY OF INVENTION

### - Technical Problem

The present invention aims to provide a method for producing a three-dimensional object and an ink set for producing a three-dimensional object, which can even produce, for example, a complex-shaped three-dimensional object made of a soft material with good fabrication accuracy.

### - Solution to Problem

As a result of extensive studies, the present inventors have found that when a three-dimensional object is fabricated by discharging a model material ink containing a crosslinkable polymer and a hydrogen peroxide decomposer and a support material ink containing a support material and hydrogen peroxide or a hydrogen peroxide donor so that the discharged hydrogen peroxide decomposer can decompose the discharged hydrogen peroxide to crosslink the crosslinkable polymer, and then removing a object of the support material ink, for example, even a complex-shaped three-dimensional object made of a soft material can be produced with good fabrication accuracy. The present inventors further have found that the hydrogen peroxide decomposer may be contained in the support material ink and the hydrogen peroxide or hydrogen peroxide donor may be contained in the model material ink. They thus have completed the present invention.

Specifically, Embodiment 1 of the present invention relates to a method for producing a three-dimensional object, including: individually discharging (a) a model material ink containing a crosslinkable polymer and (b) a support material ink containing a support material; and removing an object of the support material ink after the crosslinkable polymer is crosslinked, wherein one of the model material ink (a) and the support material ink (b) further contains a hydrogen peroxide decomposer and the other of the model material ink (a) and the support material ink (b) further contains hydrogen peroxide or a hydrogen peroxide donor, and the discharged hydrogen peroxide decomposer decomposes the discharged hydrogen peroxide to crosslink the crosslinkable polymer, thereby fabricating a three-dimensional object.

Embodiment 2 of the present invention relates to the method for producing a three-dimensional object according to Embodiment 1 of the present invention, wherein the hydrogen peroxide decomposer is a crosslink-forming enzyme.

Embodiment 3 of the present invention relates to the method for producing a three-dimensional object according to Embodiment 1 or 2 of the present invention, wherein the hydrogen peroxide donor is a hydrogen peroxide-producing enzyme.

Embodiment 4 of the present invention relates to the method for producing a three-dimensional object according to any combination with any one of Embodiments 1 to 3 of the present invention, wherein the crosslinkable polymer contains a phenolic hydroxy group.

Embodiment 5 of the present invention relates to the method for producing a three-dimensional object according to any combination with any one of Embodiments 1 to 4 of the present invention, wherein the support material is a water-soluble polymer or a water-dispersible polymer.

Embodiment 6 of the present invention relates to the method for producing a three-dimensional object according to any combination with any one of Embodiments 1 to 5 of the present invention, wherein the water-soluble polymer or water-dispersible polymer is capable of forming an aqueous gel that can interact with an ionic compound to aggregate or decrease in viscosity, and the step of removing an object of the support material ink includes removing the object of the support material ink (b) by interaction with the ionic compound.

Embodiment 7 of the present invention relates to an ink set for producing a three-dimensional object, the ink set including: (a) a model material ink containing a crosslinkable polymer; and (b) a support material ink containing a support material, wherein one of the model material ink (a) and the support material ink (b) further contains a hydrogen peroxide decomposer and the other of the model material ink (a) and the support material ink (b) further contains hydrogen peroxide or a hydrogen peroxide donor.

Embodiment 8 of the present invention relates to the ink set for producing a three-dimensional object according to Embodiment 7 of the present invention, wherein the hydrogen peroxide decomposer is a crosslink-forming enzyme.

Embodiment 9 of the present invention relates to the ink set for producing a three-dimensional object according to Embodiment 7 or 8 of the present invention, wherein the hydrogen peroxide donor is a hydrogen peroxide-producing enzyme.

Embodiment 10 of the present invention relates to the ink set for producing a three-dimensional object according to any combination with any one of Embodiments 7 to 9 of the present invention, wherein the crosslinkable polymer contains a phenolic hydroxy group.

Embodiment 11 of the present invention relates to the ink set for producing a three-dimensional object according to any combination with any one of Embodiments 7 to 10 of the present invention, wherein the support material ink (b) includes a water-soluble polymer or water-dispersible polymer which is capable of forming an aqueous gel that can interact with an ionic compound to aggregate or decrease in viscosity.

### - Advantageous Effects of Invention

The present invention can provide a method for producing a three-dimensional object which can even produce, for example, a complex-shaped three-dimensional object made of a soft material with good fabrication accuracy.

### BRIEF DESCRIPTION OF DRAWINGS

FIG. 1 shows schematic diagrams illustrating steps for producing a three-dimensional object having a bridge by a method for producing a three-dimensional object of the present invention.
FIG. 2 shows a graph of viscosity versus shear rate for support material inks prepared in Production Example 2.
FIG. 3 shows a photograph of white precipitates formed when PROJELLY used in Production Example 2 was allowed to interact with an ionic compound.
FIG. 4 shows photographs of cell growth observed when cells were proliferated in Dulbecco's modified Eagle medium (DMEM medium) containing PROJELLY used in Production Example 2.
FIG. 5 shows photographs of three-dimensional objects prepared in Example 1 and Comparative Example 1.
FIG. 6 shows photographs of three-dimensional objects prepared in Examples 1 to 3.
FIG. 7 shows photographs of three-dimensional objects prepared in Examples 4 and 5.
FIG. 8 shows photographs of three-dimensional objects prepared and cultured in Examples 6 and 7.
FIG. 9 shows photographs of cells cultured after being collected from the three-dimensional object in Example 8.
FIG. 10 shows schematic diagrams illustrating steps for producing a three-dimensional object further using a second support material ink in a method for producing a three-dimensional object of the present invention.
FIG. 11 shows schematic diagrams illustrating another example of the steps illustrated in FIG. 10.
FIG. 12 shows schematic diagrams illustrating yet another example of the steps illustrated in FIG. 10.

### DESCRIPTION OF EMBODIMENTS

### <<Method for producing three-dimensional object>>

A method for producing a three-dimensional object according to the present invention includes: individually discharging (a) a model material ink containing a crosslinkable polymer and (b) a support material ink containing a support material; and removing an object of the support material ink after the crosslinkable polymer is crosslinked, wherein one of the model material ink (a) and the support material ink (b) further contains a hydrogen peroxide decomposer and the other of the model material ink (a) and the support material ink (b) further contains hydrogen peroxide or a hydrogen peroxide donor, and the discharged hydrogen peroxide decomposer decomposes the discharged hydrogen peroxide to crosslink the crosslinkable polymer, thereby fabricating a three-dimensional object.

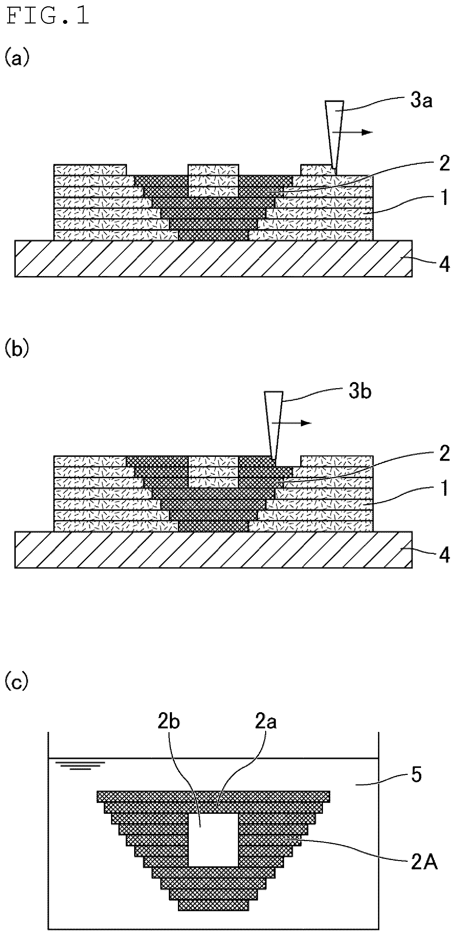

The method for producing a three-dimensional object of the present invention is briefly described below with reference to FIG. 1. FIG. 1 shows schematic diagrams illustrating steps for producing a three-dimensional object having a bridge by the method for producing a three-dimensional object of the present invention. FIG. 1(a) schematically shows discharge of a support material ink 1 from a nozzle 3a of a 3D printer. FIG. 1(b) schematically shows discharge of a model material ink 2 from a nozzle 3b of the 3D printer. It should be noted that the nozzle 3a and the nozzle 3b may be the same nozzle but are preferably different nozzles. Here, the support material ink 1 is discharged, and then the model material ink 2 is discharged to a position surrounded by the support material ink 1, whereby one layer is formed. This process is repeated to provide a layered structure.

As shown in FIG. 1(a) and FIG. 1(b), the discharged support material ink 1 and the discharged model material ink 2 are in contact with each other. For example, when the support material ink 1 contains hydrogen peroxide or a hydrogen peroxide donor along with a support material, and the model material ink 2 contains a hydrogen peroxide decomposer along with a crosslinkable polymer, hydrogen peroxide may be supplied from the discharged support material ink 1 to the discharged model material ink 2, and then the hydrogen peroxide decomposer in the discharged model material ink 2 may decompose the hydrogen peroxide to crosslink the crosslinkable polymer, causing the model material ink 2 to gel. FIG. 1(c) shows the step of immersing, after completion of the gelling of the model material ink 2, the resulting objects in a solution 5 for removing the object of the support material ink 1 to remove the objects of the support material ink 1. By removing the objects of the support material ink 1, even a complex-shaped three-dimensional object 2A (object of the model material ink) having a bridge 2a and a hole 2b can be produced.

In the method for producing a three-dimensional object of the present invention, a three-dimensional object may be produced by discharging the model material ink and the support material ink into a circular cylindrical vessel such as a beaker or a petri dish, a rectangular cylindrical vessel, or a vessel of any other shape. The inner wall of the vessel acts as a support for the model material ink and/or the support material ink, enabling the production of a taller object. Here, the vessel may be made of any material that can act as a support for the model material ink and/or the support material ink, and may be made of glass, resin, or the like. Moreover, the vessel may be produced by three-dimensional fabrication.

### <Step of individually discharging (a) model material ink containing crosslinkable polymer and (b) support material ink containing support material>

In the discharging step, for example, the model material ink (a) and the support material ink (b) containing a support material may be discharged from a nozzle of a 3D printer onto a target site on a substrate or the like. When a 3D printer is used in the ink discharging step, the 3D printer may be of any type such as an inkjet, laser, or extrusion 3D printer, but is preferably an extrusion 3D printer. The nozzle for discharging the model material ink (a) is preferably different from the nozzle for discharging the support material ink (b).

### ((a) Model material ink containing crosslinkable polymer)

The model material ink (a) contains a crosslinkable polymer that can crosslink along with the decomposition of hydrogen peroxide, causing the model material ink (a) to gel. Non-limiting examples of the crosslinkable polymer include polymers obtained by binding a polymer base material with a phenolic hydroxy group-containing compound; amino group-containing polysaccharides; and polyphenols.

Non-limiting examples of the polymer base material include polysaccharides, nucleic acids, carbohydrates, proteins, polypeptides, poly(α-hydroxy acids), polylactones, polyamino acids, polyanhydrides, polyorthoesters, poly(anhydride-co-imides), polyorthocarbonates, poly(α-hydroxyalkanoates), polydioxanones, polyphosphoesters, polylactic acid, poly(L-lactide) (PLLA), poly(D,L-lactide) (PDLLA), polyglycolic acid, polyglycolide (PGA), poly(lactide-co-glycolide) (PLGA), poly(L-lactide-co-D,L-lactide), poly(D,L-lactide-co-trimethylene carbonate), polyhydroxybutyrate (PHB), poly(ε-caprolactone), poly(δ-valerolactone), poly(γ-butyrolactone), polycaprolactone, poly(meth)acrylic acid, polycarboxylic acids, polyallylamine hydrochloride, polydiallyldimethylammonium chloride, polyalkyleneimines such as polyethyleneimine, polypropylene fumarate, polyvinyl alcohol, polyvinylpyrrolidone, polyalkylenes such as polyethylene, polymethyl methacrylate, carbon fibers, polyalkylene glycols such as polyethylene glycol, polyalkylene oxides such as polyethylene oxide, polyvinyl alcohol, polyvinylpyrrolidone, polyethyloxazoline, poly(ethylene oxide)-co-poly(propylene oxide) block copolymers, poly(ethylene terephthalate) polyamides, and salts of these polymer base materials.

Examples of the polysaccharides include cellulose, hemicellulose, dextran, hyaluronic acid, chitin, chitosan, alginic acid, chondroitin sulfate, starch, pullulan, carrageenan, curdlan, fucoidan, amylose, amylopectin, pectin, salts such as alkali metal salts thereof, and derivatives thereof. Examples of the derivatives of the polysaccharides include carboxymethylcellulose, methylcellulose, deacetylated chitins, and deacetylated chitosans.

Examples of the proteins include simple proteins such as albumin, globulin, prolamin, glutelin, histone, protamine, and scleroproteins; complex proteins such as nucleoproteins, glycoproteins, chromoproteins, and phosphoproteins; and derived proteins such as gelatin, proteose, and peptone.

Non-limiting examples of the salts in the salts of the polymer base materials include acid addition salts, metal salts, ammonium salts, and organic amine salts. Examples of the acid addition salts include inorganic acid salts such as hydrochlorides, sulfates, and phosphates; and organic acid salts such as acetates, maleates, fumarates, tartrates, and citrates. Examples of the metal salts include alkali metal salts such as sodium salts and potassium salts, alkaline earth metal salts such as calcium salts, magnesium salts, aluminum salts, and zinc salts. Examples of the organic amine salts include salts of morpholine, piperidine, or the like.

Preferred among the polymer base materials are polysaccharides and proteins because they are easily available and can provide good properties to the resulting three-dimensional object. Polysaccharides are more preferred. The polymer base materials mentioned above may be used alone or in combinations of two or more.

The phenolic hydroxy group-containing compound is not particularly limited, but is preferably a compound represented by the following formula (1): 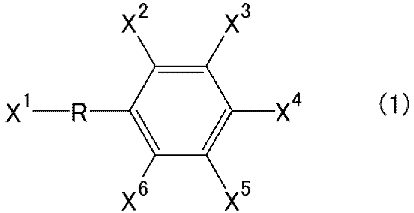 wherein X¹ represents a hydroxy group, an amino group, or a carboxylic acid (salt) group; one or two of X² to X⁶ represent hydroxy groups, and the rest each represent a hydrogen atom or a C1-C6 alkoxy group; when two of X² to X⁶ represent hydroxy groups, the two hydroxy groups are preferably ortho or para to each other; and R represents a C1-C10 divalent hydrocarbon group that optionally has a substituent. A crosslinkable polymer obtained by introducing a phenolic hydroxy group into a polymer base material can be easily crosslinked by a hydrogen peroxide decomposer such as a crosslink-forming enzyme. To facilitate the introduction of a phenolic hydroxy group into a polymer base material, X¹ is preferably a carboxylic acid (salt) group or an amino group, more preferably an amino group. Here, the amino group is preferably a primary amino group or a secondary amino group. The carboxylic acid (salt) group is preferably a carboxylic acid group or an alkali metal salt or alkaline earth metal salt of a carboxylic acid group. Moreover, the number of carbons of the divalent hydrocarbon group represented by R is preferably 1 to 8, more preferably 1 to 6. Non-limiting examples of the divalent hydrocarbon group represented by R include alkylene and alkylalkylene groups. Moreover, examples of the optional substituent of R include amide, ester, and ether groups. Here, when X¹ is a hydroxy group, it is an alcoholic hydroxy group.

Examples of the phenolic hydroxy group-containing compound include compounds having one phenolic hydroxy group, such as tyramine, homovanillic acid, and derivatives thereof, and compounds having two phenolic hydroxy groups, such as catecholamines (e.g., dopamine, noradrenaline, and adrenaline). From the standpoint of the crosslinking reactivity of the resulting crosslinkable polymer, compounds having one phenolic hydroxy group are preferred among these. More preferred are tyramine or tyramine derivatives.

The phenolic hydroxy group-containing compound may be a commercial product, for example, tyramine hydrochloride (4-(2-aminoethyl)phenol hydrochloride, product number: T2879, available from Sigma-Aldrich).

The polymer base material and the phenolic hydroxy group-containing compound may be bound by any method, such as by condensing the functional group that may be contained in the phenolic hydroxy group-containing compound, such as a carboxy group, an amino group, or an alcoholic hydroxy group, with the functional group that may be contained in the polymer base material, such as an amino group, a carboxy group, or a thiol group, using a condensing agent or using glutamyl transferase.

Non-limiting examples of the condensing agent include 1,1-carbonyldiimidazole, dicyclohexylcarbodiimide, and 3-(3-dimethylaminopropyl)-1-ethylcarbodiimide hydrochloride (water-soluble carbodiimide: WSCD·HCl). In the method of condensing the polymer base material and the phenolic hydroxy group-containing compound using the condensing agent or using glutamyl transferase, the conditions such as pH, polymer base material concentration, reaction temperature, and solvent can be appropriately selected depending on the properties of the polymer base material, phenolic hydroxy group-containing compound, and condensing agent or glutamyl transferase used.

The percentage of introduction (or modification) of the phenolic hydroxy group-containing compound relative to the polymer base material is the percentage of condensation-reacted (modified) groups based on all the condensation-reactive groups of the polymer base material. From the standpoint of achieving good balance between gelling rate and hardness (being not too hard), the percentage is preferably 0.3 to 20 mol%, more preferably 1 to 10 mol% relative to 100 mol% of the condensation-reactive groups of the polymer base material.

Usable crosslinkable polymers also include amino group-containing polysaccharides and polyphenols. Examples of the amino group-containing polysaccharides include acetylated chitins and chitosans. Moreover, examples of the polyphenols include catechin compounds, anthocyanin compounds, rutin, and natural pigments.

The concentration of the crosslinkable polymer in the model material ink (a) is usually 0.1 to 30% by weight, preferably 0.5 to 20% by weight, more preferably 0.75 to 10% by weight. If the concentration of the crosslinkable polymer is lower than 0.1% by weight, the three-dimensional object may have insufficient strength. If the concentration of the crosslinkable polymer is higher than 30% by weight, the model material ink may have too high a viscosity, which may increase the pressure when the ink is discharged from the nozzle, possibly affecting the quality of the model material ink (a). The concentration of the crosslinkable polymer in the model material ink (a) is also usually 0.1 to 30 w/v% (g/100 mL), preferably 0.5 to 20 w/v% (g/100 mL), more preferably 0.75 to 10 w/v% (g/100 mL).

In the production method of the present invention, the model material ink (a) further contains a hydrogen peroxide decomposer or further contains hydrogen peroxide or a hydrogen peroxide donor. In the following, the model material ink (a) further containing a hydrogen peroxide decomposer is described in detail.

The hydrogen peroxide decomposer is not limited as long as it can decompose hydrogen peroxide to crosslink the crosslinkable polymer in the model material ink (a), and preferred examples include crosslink-forming enzymes, complexes, and proteins. Non-limiting preferred examples of the crosslink-forming enzymes include peroxidases, laccases, tyrosinases, and catalases, as their reaction can proceed at room temperature under atmospheric pressure and they also have a high degree of safety. The crosslink-forming enzymes may be of any origin. A preferred peroxidase is horseradish peroxidase. Examples of the complexes include iron porphyrin complexes, as their reaction can proceed at room temperature under atmospheric pressure and they also have a high degree of safety. Examples of the proteins include hemoglobin.

When the model material ink (a) contains a crosslink-forming enzyme, the concentration of the crosslink-forming enzyme in the model material ink (a) is not particularly limited. From the standpoint of even faster gelling, the concentration is preferably 0.1 U/mL or higher, more preferably 1 U/mL or higher. The concentration of the crosslink-forming enzyme is also usually 10000 U/mL or lower, preferably 2000 U/mL or lower, more preferably 1000 U/mL or lower, still more preferably 500 U/mL or lower. When the model material ink (a) contains a hydrogen peroxide decomposer other than crosslink-forming enzymes, the concentration of the hydrogen peroxide decomposer other than crosslink-forming enzymes in the model material ink (a) is preferably 0.1% by weight or higher, more preferably 1% by weight or higher, from the standpoint of even faster gelling. The concentration of the hydrogen peroxide decomposer other than crosslink-forming enzymes is also usually 20% by weight or lower, preferably 10% by weight or lower.

When the model material ink (a) contains hydrogen peroxide or a hydrogen peroxide donor, specific examples of the hydrogen peroxide donor and preferred concentrations of the hydrogen peroxide or hydrogen peroxide donor in the model material ink (a) are as described for the specific examples of the hydrogen peroxide donor contained in the support material ink (b) and the preferred concentrations of the hydrogen peroxide or hydrogen peroxide donor in the support material ink (b), respectively, described later.

The model material ink (a) may contain other components in addition to the crosslinkable polymer and the hydrogen peroxide decomposer or hydrogen peroxide or hydrogen peroxide donor. Examples of such other components include various cells, solvents, polymerization initiators, chain transfer agents, plasticizers, pH adjusters, buffers, preservatives, solvents, ultraviolet absorbers, coloring materials, and surfactants. Examples of the solvents include water, phosphate-buffered saline (PBS), and mixtures of water and organic solvents. Non-limiting examples of the organic solvents include ethanol, glycerol, and dimethylsulfoxide.

Examples of animals from which the cells are derived include mammals, birds, and reptiles, with mammals being preferred. Examples of the mammals include humans, pigs, cows, sheep, goats, rabbits, mice, rats, dogs, cats, and chickens, with humans being preferred. Examples of cell types include epithelial cells, fibroblasts, chondrocytes, osteoblasts, smooth muscle cells, nerve cells, and stem cells.

The concentration of cells in the model material ink is not particularly limited, but is preferably 1 × 10³ to 1 × 10⁹ cells/mL, more preferably 1 × 10⁴ to × 10⁷ cells/mL.

The model material ink (a) is preferably liquid at room temperature. Being liquid at room temperature, the model material ink (a) can be easily discharged using a 3D printer or the like. The model material ink (a) may have any viscosity at 20°C, but preferably has a viscosity at 20°C of 10 mPa·s or higher, more preferably 20 mPa·s or higher, still more preferably 50 mPa·s or higher. The viscosity is also preferably 100000 mPa·s or lower, more preferably 10000 mPa·s or lower, still more preferably 2000 mPa·s or lower. Since the production method of the present invention can sufficiently prevent flowing (dripping) of the model material ink (a) before gelling, a model material ink (a) with low viscosity can be suitably used. Here, the viscosity is measured using a cone and plate E-type viscometer at a rotation rate of 20 rpm.

The model material ink (a) can be produced by mixing the above-described crosslinkable polymer and the above-described hydrogen peroxide decomposer or hydrogen peroxide or hydrogen peroxide donor, and optionally other components. The mixing conditions are not particularly limited, but from the standpoint of enzymatic activity, the mixing is preferably performed at 4°C to 45°C, more preferably 10°C to 40°C. Moreover, from the standpoint of enzymatic activity, the pH during the mixing is usually 2 to 11, preferably 5 to 9. The resulting model material ink is usually preferably stored at -80°C to 20°C. Moreover, the produced model material ink may be freeze-dried. The freeze-drying may be performed using a known method.

### ((b) Support material ink containing support material)

The support material ink (b), when discharged, may be crosslinked to retain its shape and form an object, but is conveniently and preferably capable of retaining its shape by itself and directly forming an object. The object of the support material ink (b) can retain the shape of the model material ink (a) until the model material ink (a) is sufficiently gelled, thereby preventing flowing (dripping) of the model material ink (a) or deformation of the model material ink (a) under gravity. After the model material ink (a) is gelled, the object of the support material ink (b) can be removed as described later.

The support material contained in the support material ink (b) is a polymer such as a natural polymer or a synthetic polymer. Examples of the polymer include polysaccharides, nucleic acids, carbohydrates, proteins, polypeptides, polyamino acids, polylactic acid, polyalkylene oxides such as polyethylene oxide, polyalkyleneimines such as polyethyleneimine, polyvinylpyrrolidone, polyalkylene glycols such as polyethylene glycol, polyacrylic acid, polymethacrylic acid, polyglutamic acid, carboxyvinyl polymers, carboxymethylcellulose, methylcellulose, hydroxyethylcellulose, albumin, gelatin, collagen, silk fibroin, polyvinyl alcohol, and salts of these polymers. Preferred among these polymers are polysaccharides, nucleic acids, carbohydrates, proteins, polypeptides, polyamino acids, polylactic acid, polyethylene oxide, polyethyleneimine, polyvinylpyrrolidone, polyethylene glycol, polyacrylic acid, polyglutamic acid, albumin, gelatin, collagen, polyvinyl alcohol, and salts of these polymers. The polysaccharides, the proteins, and the salts in the salts of the polymers are the same as the polysaccharides, the proteins, and the salts in the salts of the polymer base materials, respectively, described for the polymer base material. Moreover, the support material may be obtained by crosslinking any of the above-mentioned polymers with a crosslinker.

Examples of the polysaccharides include cellulose, hemicellulose, dextran, hyaluronic acid, chitin, chitosan, alginic acid, chondroitin sulfate, starch, pullulan, carrageenan, curdlan, fucoidan, amylose, amylopectin, pectin, salts such as alkali metal salts thereof, and derivatives thereof.

In particular, the support material is preferably a water-soluble polymer or a water-dispersible polymer. This enables, in the step of removing the object of the support material ink (b), easy removal of the object under mild conditions using water or an aqueous solution as described later. Herein, the solubility of the water-soluble polymer in 100 g of water at 20°C is not particularly limited, but is preferably 1 g or more, more preferably 5 g or more.

Preferably, the water-soluble polymer or water-dispersible polymer is capable of forming an aqueous polymer gel that can interact with an ionic compound to aggregate or decrease in viscosity. The water-soluble polymer or water-dispersible polymer which is capable of forming an aqueous polymer gel that can interact with an ionic compound to aggregate or decrease in viscosity may be obtained by crosslinking, with a crosslinker, a hydrocarbon chain (e.g., polyacrylic acid) containing an acid group, such as a carboxylic acid group, as a main chain. Non-limiting examples of the crosslinker include allyl sucrose and pentaerythritol. The ionic compound is described later.

From the standpoint of further improving the pseudoplasticity of the support material ink (b), the concentration of the polymer in the support material ink (b) is preferably 0.1% by weight or higher, more preferably 0.3% by weight or higher, still more preferably 0.5% by weight or higher, particularly preferably 1.0% by weight or higher. The concentration of the polymer is also preferably 30.0% by weight or lower, more preferably 15.0% by weight or lower, still more preferably 10.0% by weight or lower. Here, when the support material ink (b) contains two or more polymers, the above concentration means the total concentration of all the polymers contained in the support material ink.

The support material ink (b) further contains hydrogen peroxide or a hydrogen peroxide donor or further contains a hydrogen peroxide decomposer. In the following, the support material ink (b) further containing hydrogen peroxide or a hydrogen peroxide donor is described in detail.

When the support material ink (b) contains hydrogen peroxide, the concentration of hydrogen peroxide in the support material ink (b) is not particularly limited, but is preferably 0.01 mM or higher and 1 M or lower. The concentration is more preferably 0.1 mM or higher, still more preferably 1 mM or higher, particularly preferably 5 mM or higher. The concentration of hydrogen peroxide is also more preferably 100 mM or lower. From the standpoint of allowing the three-dimensional object to have even better fabrication accuracy, the concentration is still more preferably 30 mM or lower, particularly preferably 10 mM or lower.

The hydrogen peroxide donor is not particularly limited as long as it can produce hydrogen peroxide. Examples include hydrogen peroxide-producing enzymes and photocatalysts, with hydrogen peroxide-producing enzymes being preferred. Examples of the hydrogen peroxide-producing enzymes include choline oxidase, amino acid oxidase, alcohol oxidase, pyruvate oxidase, cholesterol oxidase, and glucose oxidase.

When the support material ink (b) contains a hydrogen peroxide-producing enzyme, the concentration of the hydrogen peroxide-producing enzyme in the support material ink (b) is preferably 0.1 mU/mL or higher, more preferably 1 mU/mL or higher, still more preferably 2.5 mU/mL or higher, from the standpoint of reactivity. The concentration of the hydrogen peroxide-producing enzyme is also preferably 20000 mU/mL or lower, more preferably 10000 mU/mL or lower, still more preferably 1000 mU/mL or lower, particularly preferably 200 mU/mL or lower. When the support material ink (b) contains a hydrogen peroxide donor other than hydrogen peroxide-producing enzymes, the concentration of the hydrogen peroxide donor other than hydrogen peroxide-producing enzymes in the support material ink (b) is preferably 0.1% by weight or higher, more preferably 1% by weight or higher, from the standpoint of reactivity. The concentration of the hydrogen peroxide donor other than hydrogen peroxide-producing enzymes is also usually 20% by weight or lower, preferably 10% by weight or lower.

When the support material ink (b) contains a hydrogen peroxide decomposer, specific examples of the hydrogen peroxide decomposer and preferred concentrations of the hydrogen peroxide decomposer in the support material ink (b) are as described for the specific examples of the hydrogen peroxide decomposer contained in the model material ink (a) and the preferred concentrations of the hydrogen peroxide decomposer in the model material ink (a), respectively, described above.

The support material ink (b) may contain other components in addition to the polymer as the support material and the hydrogen peroxide or hydrogen peroxide donor or hydrogen peroxide decomposer. Examples of such other components include humectants such as glycerol, pH adjusters such as alkali metal hydroxides and organic amines, preservatives, coloring materials, solvents, plasticizers, ultraviolet absorbers, and surfactants. Examples of the solvents include water, phosphate-buffered saline (PBS), and mixtures of water and organic solvents. Non-limiting examples of the organic solvents include ethanol and glycerol.

The support material ink (b) is preferably liquid or gel-like, more preferably gel-like, at room temperature. Being gel-like at room temperature, the support material ink (b) can be easily fabricated using a 3D printer or the like. The viscosity of the support material ink (b) at a shear rate of 0.01 (1/s) at 20°C is preferably 10000 mPa·s or higher. To retain its shape by itself, the viscosity is more preferably 100000 mPa·s or higher, still more preferably 500000 mPa·s or higher. Moreover, the upper limit of the viscosity is not particularly limited, but the viscosity is usually 10000000 mPa·s or lower.

The viscosity of the support material ink (b) at a shear rate of 10 (1/s) at 20°C is preferably 10 mPa·s or higher, more preferably 100 mPa·s or higher, still more preferably 1000 mPa·s or higher. Moreover, the upper limit of the viscosity is not particularly limited, but the viscosity is usually lower than 10000 mPa·s. Here, the viscosity is measured using a viscosity/viscoelasticity measuring device available from Thermo Fisher Scientific.

The ratio of the viscosity at a shear rate of 0.01 (1/s) to the viscosity at a shear rate of 10 (1/s) of the support material ink (b) at 20°C is preferably 5 or higher, more preferably 10 or higher, still more preferably 20 or higher, particularly preferably 50 or higher. This allows the support material ink (b) to have better pseudoplasticity.

The support material ink (b) can be produced by mixing the polymer and the hydrogen peroxide or hydrogen peroxide donor or hydrogen peroxide decomposer, and optionally other components. The mixing conditions are not particularly limited.

As described above, the production method of the present invention usually includes discharging the model material ink (a) and the support material ink (b) using a 3D printer to form a layer and repeating this process to stack layers. As the discharged model material ink (a) and the discharged support material ink (b) are in contact with each other, the discharged hydrogen peroxide decomposer can decompose the discharged hydrogen peroxide to crosslink the crosslinkable polymer, thereby fabricating an object of the model material ink (a). Here, the hydrogen peroxide or hydrogen peroxide donor or hydrogen peroxide decomposer contained in the discharged support material ink (b) can be supplied to the discharged model material ink (a). It should be noted that in the production method of the present invention, in addition to the crosslinking of the crosslinkable polymer by the decomposition of hydrogen peroxide, ionic crosslinking, photo-crosslinking, enzymatic crosslinking, temperature change, etc. may contribute to the crosslinking of the crosslinkable polymer.

### (Second support material ink containing second support material)

In the production method of the present invention, in conjunction with the model material ink (a) and the support material ink (b) (hereinafter also referred to as the first support material ink), a second support material ink as a support for the model material ink and the first support material ink may be discharged for the production. The second support material ink may be discharged in advance to produce a three-dimensional object (vessel or outer frame), or may be discharged in advance to produce part of a three-dimensional object (vessel or outer frame) and then discharged in conjunction with the model material ink and the first support material ink to produce the rest of the three-dimensional object. Alternatively, the entire three-dimensional object may be produced at the same time. Since the three-dimensional object (vessel or outer frame) formed from the second support material ink serves as a support for the model material ink and the first support material ink, collapse of the model material ink and the first support material ink can be more sufficiently prevented, and a taller three-dimensional object can be produced if desired. Moreover, such a second support material ink may not contain a hydrogen peroxide decomposer or may not contain hydrogen peroxide or a hydrogen peroxide donor. Such a second support material ink may be substituted for the first support material ink to reduce the amount of the first support material ink discharged and thus save the hydrogen peroxide decomposer or hydrogen peroxide or hydrogen peroxide donor contained in the first support material ink. Here, the second support material ink may contain any second support material that can serve as a support for the model material ink and/or the support material ink, which may be the support material used in the support material ink (b), glass, resin, or the like. As described later, if an appropriate material is selected for the second support material ink, the object of the second support material ink can be removed in a similar way to the object of the first support material ink. The model material ink may be partially or entirely in contact with the object formed of the second support material.

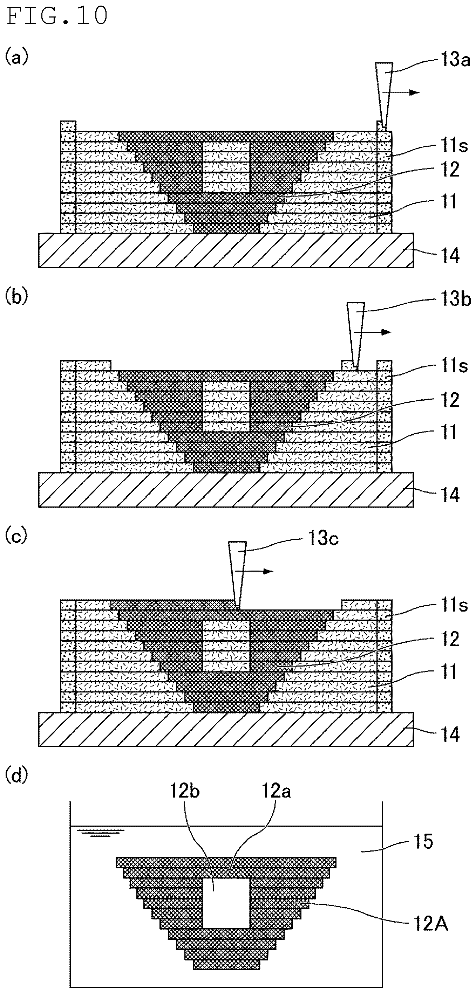

FIG. 10 shows schematic diagrams illustrating steps for producing a three-dimensional object further using a second support material ink in the method for producing a three-dimensional object of the present invention. Only the features differing from FIG. 1 are described below. FIG. 10(a) schematically shows discharge of a second support material ink 11s from a nozzle 13a of a 3D printer. FIG. 10(b) schematically shows discharge of a first support material ink 11 from a nozzle 13b of the 3D printer. FIG. 10(c) schematically shows discharge of a model material ink 12 from a nozzle 13c of the 3D printer. It should be noted that the nozzle 13a, the nozzle 13b, and the nozzle 13c may be the same nozzle but are preferably different nozzles. In FIG. 10, the second support material ink 11s is discharged, the first support material ink 11 is discharged to a position surrounded by the second support material ink 11s, and the model material ink 12 is discharged to a position surrounded by the first support material ink 11, whereby one layer is formed. This process is repeated to provide a layered structure.

As shown in FIG. 10(a) to FIG. 10(c), the discharged second support material ink 11s is in the form of a thin wall having both smooth inner and outer peripheries, and is in contact with and supports the discharged first support material ink 11, and also indirectly supports the discharged model material ink 12. When the second support material ink 11s used is capable of forming a hard object, the model material ink 12 and the first support material ink 11 can be more sufficiently prevented from collapsing during the gelling or other processes. It is also possible to produce a taller three-dimensional object if desired.

FIG. 10(d), as with FIG. 1(c), shows the step of immersing, after completion of the gelling of the model material ink 12, the resulting objects in a removal solution 15 to remove the objects of the first support material ink 11 and the object of the second support material ink 11s. This step is described later.

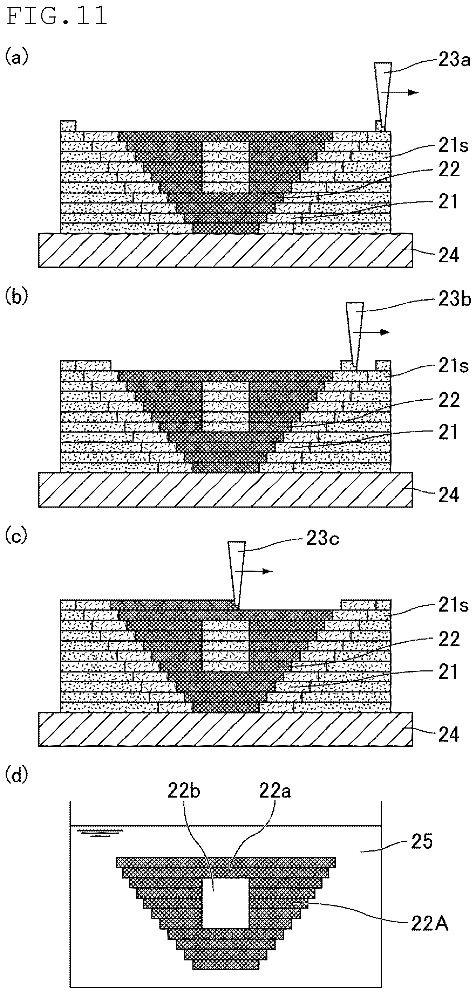

FIG. 11 is the same as the schematic diagrams shown in FIG. 10, except that the area in which a first support material ink 21 and a second support material ink 21s are discharged is changed as shown in FIG. 11. Only the features differing from FIG. 10 are described below. In FIG. 11, the second support material ink is discharged such that the inner periphery is in the form of downwardly expanding steps. As compared with FIG. 10, the second support material ink is substituted for part of the first support material ink. When the second support material ink 21s used is capable of forming a hard object and contains no hydrogen peroxide decomposer, hydrogen peroxide, or hydrogen peroxide donor, the model material ink 22 and the first support material ink 21 can be more sufficiently prevented from collapsing during the gelling or other processes, while the amount of the first support material ink 21 discharged can be reduced, and thus the hydrogen peroxide or hydrogen peroxide donor or hydrogen peroxide decomposer used can be saved.

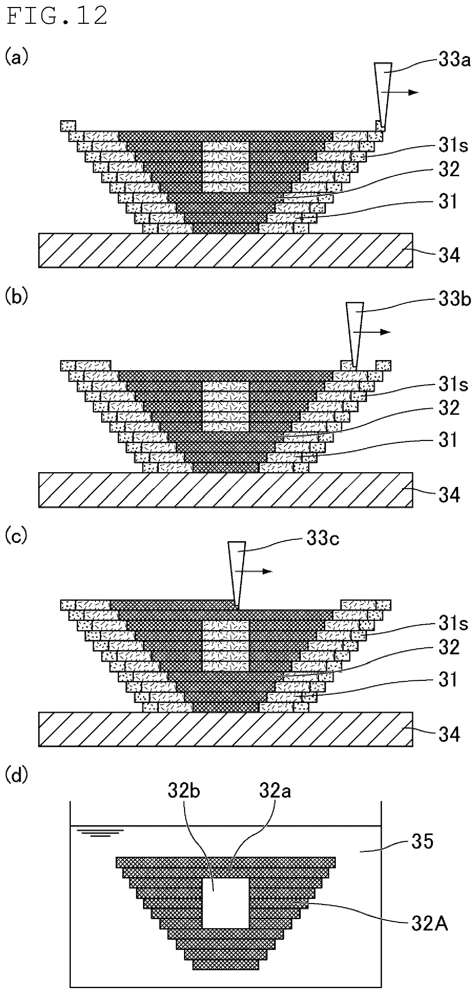

FIG. 12 is the same as the schematic diagrams in FIG. 10, except that the area in which a second support material ink 31s is discharged is changed as shown in FIG. 12. Only the features differing from FIG. 10 are described below. In FIG. 12, the second support material ink is discharged such that the outer periphery is in the form of upwardly expanding steps to match the shape of the discharged model material ink 32 and the discharged first support material ink 31. As compared with FIG. 10, the amount of the second support material ink discharged can also be reduced.

### <Step of removing object of support material ink after crosslinkable polymer is crosslinked>

The removal step is not particularly limited as long as it can remove the object of the support material ink (b) to give the object of the model material ink (a). For example, the object of the support material ink (b) is preferably immersed and/or washed in a solution for removing the object of the support material ink (b). The removal step is preferably performed under mild conditions to reduce the impact on the object (three-dimensional object) of the model material ink (a). For example, the removal step is preferably performed at a temperature of 10°C to 40°C. Moreover, from the standpoint of enzymatic activity, the pH at 20°C of the removal solution is preferably 2 to 10, more preferably 5 to 9. It should be noted that the object of the support material ink is made of the support material (polymer) and other components remaining after the hydrogen peroxide or hydrogen peroxide decomposer is supplied from the support material ink to the model material ink.

When a second support material ink as described above is further used in conjunction with the support material ink (b), the object of the support material ink (b) and the object of the second support material ink may be removed by the respective different methods, but preferably the object of the second support material ink is also removed along with the object of the support material ink (b) by the above removal step.

When the support material is a water-soluble polymer or water-dispersible polymer, the removal solution used may be water or an aqueous solution. Moreover, when the water-soluble polymer or water-dispersible polymer is capable of forming an aqueous polymer gel that can interact with an ionic compound to aggregate or decrease in viscosity, an aqueous solution of the ionic compound can be particularly suitably used as the removal solution. The interaction of the water-soluble polymer or water-dispersible polymer with the ionic compound is not particularly limited as long as the aqueous polymer gel is allowed to aggregate or decrease in viscosity as a result of contact of the water-soluble polymer or water-dispersible polymer with the ionic compound. An example of such an interaction is a reaction (chemical reaction) with the ionic compound. When the aqueous polymer gel is degradable by enzymatic treatment, a degrading enzyme can be used, and the object of the support material ink can be removed by using a culture medium, a buffer, physiological saline, water, etc. after the enzymatic treatment. When the support material is capable of undergoing a phase transition depending on the temperature, the phase transition can be induced by heating or cooling, and the object of the support material ink can be removed by using water or an aqueous solution after the phase transition.

Examples of the ionic compound include multivalent metal salts such as salts of calcium, zinc, magnesium, barium, strontium, copper, iron, aluminum, and cobalt. Preferred among these are calcium chloride, calcium hydroxide, calcium carbonate, and calcium lactate. More preferred is calcium chloride.

The concentration of the ionic compound in the removal solution is preferably 1 mM or higher, more preferably 10 mM or higher. The concentration is preferably 2 M or lower, more preferably 0.2 M or lower.

Non-limiting examples of the degrading enzyme include cellulase, amylase, dextranase, carrageenase, alginate lyase, hyaluronidase, chitinase, and chitosanase.

The concentration of the degrading enzyme in the removal solution is preferably 0.1 to 5% by weight, more preferably 0.1 to 1% by weight.

### <Other steps>

The production method of the present invention may include, after the above-described step of individually discharging the model material ink and the support material ink but before the above-described step of removing the object of the support material ink, allowing the discharged model material ink and the discharged support material ink to stand so that the model material can sufficiently gel.

The three-dimensional object produced by the method of the present invention can be, for example, a complex-shaped three-dimensional object made of a soft material. In particular, it can be suitably used as an artificial organ or the like in the field of regenerative medicine. Here, the three-dimensional object may have any shape, but the three-dimensional object is suitable for a shape with a bridge and/or a hole. The dimensions of the three-dimensional object can be appropriately set.

### <<Ink set for producing three-dimensional object>>

The present invention also relates to an ink set for producing a three-dimensional object, the ink set including: (a) a model material ink containing a crosslinkable polymer; and (b) a support material ink containing a support material, wherein one of the model material ink and the support material ink further contains a hydrogen peroxide decomposer and the other of the model material ink and the support material ink further contains hydrogen peroxide or a hydrogen peroxide donor. The crosslinkable polymer, the support material, the hydrogen peroxide decomposer, the hydrogen peroxide, the hydrogen peroxide donor, and the other components contained in the model material ink (a) and the support material ink (b) are as described above. The method for producing a three-dimensional object of the present invention can be suitably carried out with the ink set for producing a three-dimensional object of the present invention.

### EXAMPLES

In the following, the present invention is described with reference to examples although the present invention is not limited to the following examples. Hereinafter, "parts" or "%" means "parts by weight" or "% by weight", respectively, unless otherwise specified.

### Production Example 1 (preparation of model material ink)

Ten grams of sodium hyaluronate (available from FUJIMEDICA Corporation) was dissolved in 1 L of 0.1 M 2-morpholinoethanesulfonic acid monohydrate (MES) buffer (pH 5.8). A solution of 0.56 g of tyramine hydrochloride, 1.43 g of water-soluble carbodiimide (WSCD·HCl), and 0.43 g of N-hydroxysuccinimide (NHS) dissolved in 10 mL of purified water was added, followed by stirring at room temperature for 22 hours. The resulting reaction mixture was ultrafiltered and subjected to vacuum freeze drying to prepare HYA-Ph (phenolic hydroxy group modification percentage: 4.8 mol%). The prepared HYA-Ph and a hydrogen peroxide decomposer (horseradish peroxidase, HRP) were dissolved in a solvent (phosphate-buffered saline containing no calcium or magnesium) at concentrations of 1.0 w/v% (g/100 mL) and 10 U/mL, respectively, to prepare a model material ink.

### Production Example 2 (preparation of support material ink)

Hydrogen peroxide was dissolved in PROJELLY (available from JEX Co., Ltd., high viscosity type) at concentrations of 0.1 mM, 1.0 mM, 10 mM, and 100 mM to prepare support material inks.

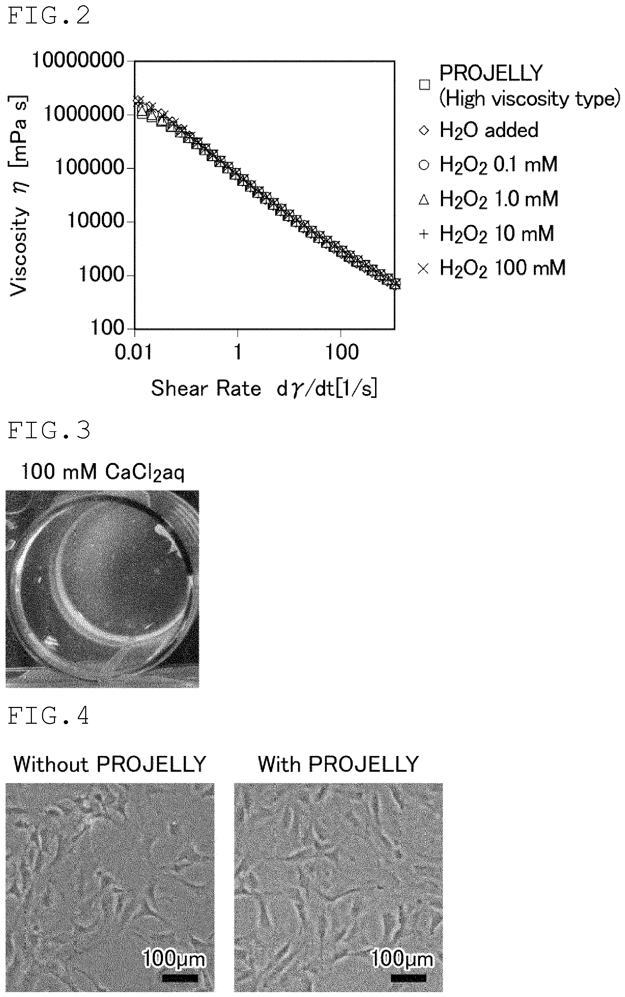

The viscosity versus shear rate for PROJELLY used in the support material inks is as shown in FIG. 2, demonstrating that the addition of hydrogen peroxide as a crosslinker does not change the viscosity. Moreover, since PROJELLY has very high viscosity at low shear rates, the support material inks mainly containing it, obtained in Production Example 2, could form objects capable of retaining their shapes by themselves after being discharged.

As shown in FIG. 3, PROJELLY reacted with calcium ions Ca²⁺ in a 100 mM calcium chloride aqueous solution to form white precipitates and thus showed a great decrease in viscosity. As PROJELLY can thus interact with an ionic compound to aggregate or decrease in viscosity, the ionic compound can be suitably used to remove an object of a support material ink containing PROJELLY.

FIG. 4 shows that cells proliferated and expanded normally in Dulbecco's modified Eagle medium (DMEM medium) containing PROJELLY as in DMEM medium without PROJELLY. The cells used were mouse embryonic fibroblasts (10T1/2 cells). Thus, PROJELLY had substantially no cytotoxicity. From the above, PROJELLY is suitable as a raw material for a support material ink.

### Production Example 3 (preparation of model material ink)

A solution of modified polyvinyl alcohol (AF-17 available from Japan Vam & Poval Co., Ltd.) dissolved at 3.3% (w/v) in 0.1 M 2-morpholinoethanesulfonic acid monohydrate (MES) buffer (pH 6.0) was heated at 120°C for 15 minutes. The solution was cooled to room temperature, and then tyramine hydrochloride, water-soluble carbodiimide (WSCD·HCl), and N-hydroxysuccinimide (NHS) were added at 3.3%, 3.3%, and 1.0% (w/v), respectively, followed by stirring at 40°C for 20 hours. The resulting reaction solution was added to ethanol for precipitation. The precipitates were then washed with a 90% ethanol aqueous solution and ethanol and dried under reduced pressure to prepare PVA-Ph (phenolic hydroxy group modification rate: 2.4 × 10⁻⁴ mol/g). A model material ink was prepared as in Production Example 1 such that the concentration of the prepared PVA-Ph was 1.0 w/v% (g/100 mL).

### Production Example 4 (preparation of model material ink)

Ten grams of gelatin (available from Jellice Co., Ltd.) was dissolved in 500 mL of 0.05 M 2-morpholinoethanesulfonic acid monohydrate (MES) buffer (pH 6.0). A solution of 1.84 g of tyramine hydrochloride, 1.85 g of water-soluble carbodiimide (WSCD·HCl), and 0.57 g of N-hydroxysuccinimide (NHS) dissolved in 5 mL of purified water was further added, followed by stirring at room temperature for 20 hours. The resulting reaction mixture was ultrafiltered and subjected to vacuum freeze drying to prepare Gela-Ph (phenolic hydroxy group modification rate: 2.7 × 10⁻⁴ mol/g). A model material ink was prepared as in Production Example 1 such that the concentration of the prepared Gela-Ph was 3.0 w/v% (g/100 mL).

### Example 1

Two types of hexagonal cylinders with the sizes indicated below were prepared as three-dimensional objects by the following procedure: the support material ink with a hydrogen peroxide concentration of 10 mM prepared in Production Example 2 and the model material ink prepared in Production Example 1 were individually discharged to form a layer on a substrate using a 3D printer (product name: BIO X, manufacturer: Cellink). This process was repeated to stack layers. After completion of the discharge, the layers were allowed to stand at 25°C for 10 minutes to allow the model material ink to sufficiently gel. The resulting objects were then immersed in a calcium chloride solution (concentration 100 mM) to remove the objects of the support material ink.
Object 1 (thickness: 1 mm, height: 5 mm, length of a side: 6 mm)
Object 2 (thickness: 2 mm, height: 5 mm, length of a side: 6 mm)

### Comparative Example 1

Three-dimensional objects were prepared as in Example 1, except that no support material ink was used and hydrogen peroxide vapor exposure conditions were employed.

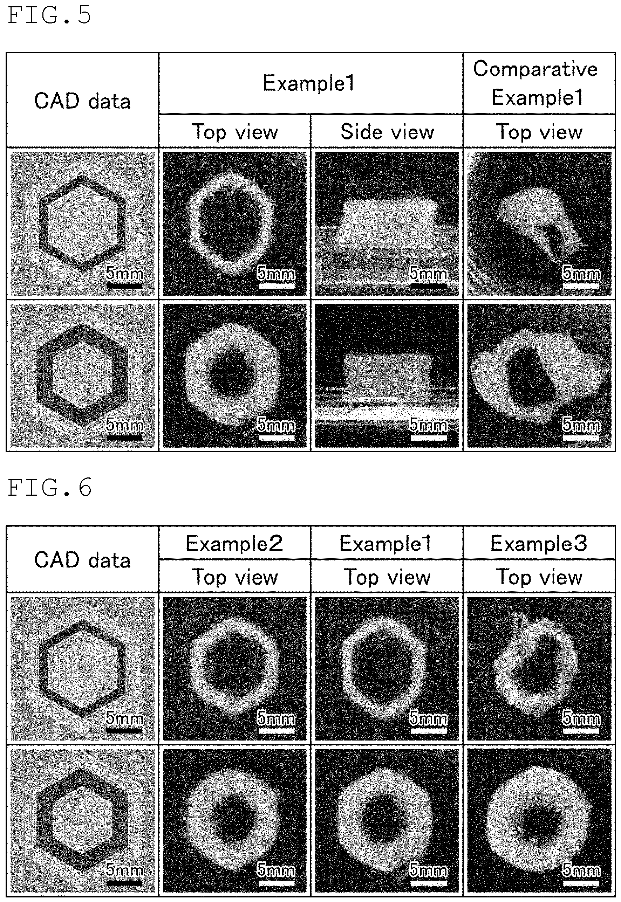

As shown in FIG. 5, in Example 1, where the support material ink was used and the model material ink was gelled while being held by the objects of the support material ink, objects with very good fabrication accuracy could be prepared. In contrast, in Comparative Example 1, where no support material ink was used and hydrogen peroxide vapor exposure conditions were employed, only deformed objects with low fabrication accuracy could be obtained.

### Example 2

Three-dimensional objects were prepared as in Example 1, except that the support material ink with a hydrogen peroxide concentration of 1 mM was used.

### Example 3

Three-dimensional objects were prepared as in Example 1, except that the support material ink with a hydrogen peroxide concentration of 100 mM was used.

As shown in FIG. 6, in Example 2, both of the obtained three-dimensional objects had good fabrication accuracy. In contrast, in Example 3, although the obtained three-dimensional objects had good fabrication accuracy, they contained many bubbles due to the high hydrogen peroxide concentration, and their fabrication accuracies were slightly lower than those of the three-dimensional objects obtained in Example 1 or 2.

The above results demonstrate that when producing complex-shaped objects made of soft materials, the production method of the present invention can be used to provide three-dimensional objects with good fabrication accuracy.

### Example 4

A three-dimensional object was prepared as in Example 1, except that the ink prepared in Production Example 3 was used as the model material ink.

### Example 5

A three-dimensional object was prepared as in Example 1, except that the ink prepared in Production Example 4 was used as the model material ink.

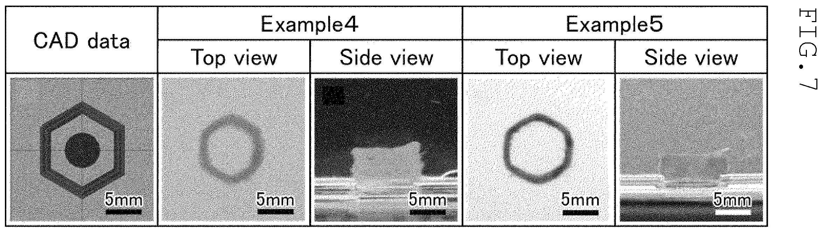

As shown in FIG. 7, similar to Example 1, where a model material ink containing hyaluronic acid was used, objects with very good fabrication accuracy could also be prepared in Example 4, where a model material ink containing modified polyvinyl alcohol was used, and in Example 5, where a model material ink containing gelatin was used.

### Example 6

Mouse fibroblast cells 10T1/2 were dispersed at 1 × 10⁵ cells/mL in the model material ink prepared in Production Example 1, and a three-dimensional object was prepared as in Example 1 using the obtained cell-containing model material ink and the support material ink prepared in Production Example 2.

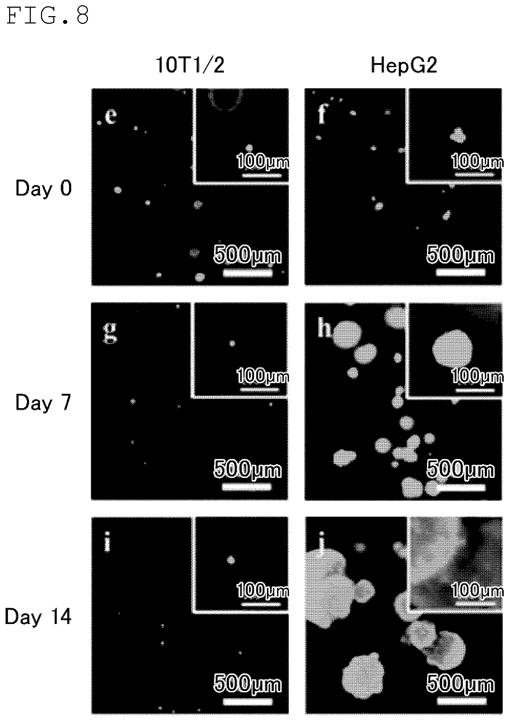

The obtained three-dimensional object was cultured in DMEM medium containing 10 vol% fetal bovine serum. Before the start of culture, and at 7 and 14 days after the start of culture, the cell-containing object was immersed in phosphate-buffered saline (pH 7.4) containing the live cell staining reagent Calcein-AM and the dead cell staining reagent PI at 1 µg/mL each for 10 minutes for staining. Photographs of the results are shown in FIG. 8. Many cells survived after 14 days of culture.

### Example 7

Human hepatocellular carcinoma cells HepG2 were dispersed at 1 × 10⁵ cells/mL in the model material ink prepared in Production Example 1, and a three-dimensional object was prepared as in Example 1 using the obtained cell-containing model material ink and the support material ink prepared in Production Example **2.**

The obtained three-dimensional object was cultured in DMEM medium containing 10 vol% fetal bovine serum. Before the start of culture, and at 7 and 14 days after the start of culture, the cell-containing object was immersed in phosphate-buffered saline (pH 7.4) containing the live cell staining reagent Calcein-AM and the dead cell staining reagent PI at 1 µg/mL each for 10 minutes for staining. Photographs of the results are shown in FIG. 8. Many cells survived after 14 days of culture. Furthermore, the increase in the area of the green regions indicating live cells within the structure confirmed that the proliferation of HepG2 cells.

### Example 8

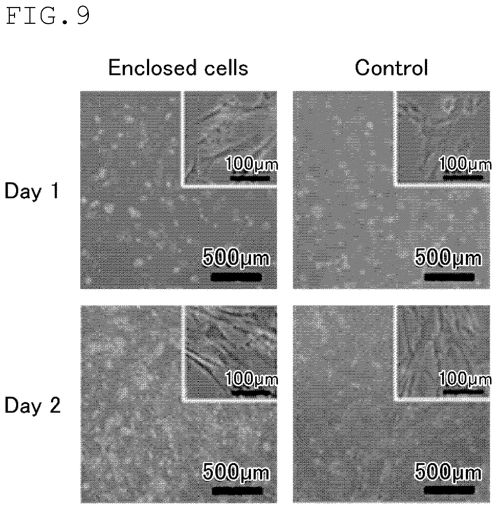

Immediately after the three-dimensional object was prepared in Example 6, it was immersed and decomposed in DMEM medium containing 1 mg/mL hyaluronidase for 60 minutes, and then the cells were collected. The collected cells were seeded and cultured at 1 × 10⁴ cells/cm² in a culture dish (available from Corning, 60-mm-diameter dish). Photographs of the results are shown in FIG. 9. The cells maintained a shape, adhesion ability, and proliferation ability similar to those of the untreated cells. The results of Examples 6 to 8 suggest that the production method of the present invention has a low negative impact on cells.

### REFERENCE SIGNS LIST

1: support material ink
2, 12, 22, 32: model material ink
2A, 12A, 22A, 32A: three-dimensional object
2a, 12a, 22a, 32a: bridge
2b, 12b, 22b, 32b: hole
3a, 3b, 13a, 13b, 13c, 23a, 23b, 23c, 33a, 33b, 33c: nozzle
4, 14, 24, 34: substrate
5, 15, 25, 35: removal solution
11, 21, 31: first support material ink
11s, 21s, 31s: second support material ink

## Claims

1. A method for producing a three-dimensional object, comprising:
individually discharging (a) a model material ink containing a crosslinkable polymer and (b) a support material ink containing a support material; and
removing an object of the support material ink after the crosslinkable polymer is crosslinked,
wherein one of the model material ink (a) and the support material ink (b) further contains a hydrogen peroxide decomposer and the other of the model material ink (a) and the support material ink (b) further contains hydrogen peroxide or a hydrogen peroxide donor, and
the discharged hydrogen peroxide decomposer decomposes the discharged hydrogen peroxide to crosslink the crosslinkable polymer, thereby fabricating a three-dimensional object.

2. The method for producing a three-dimensional object according to claim 1,
wherein the hydrogen peroxide decomposer is a crosslink-forming enzyme.

3. The method for producing a three-dimensional object according to claim 1 or 2,
wherein the hydrogen peroxide donor is a hydrogen peroxide-producing enzyme.

4. The method for producing a three-dimensional object according to any one of claims 1 to 3,
wherein the crosslinkable polymer contains a phenolic hydroxy group.

5. The method for producing a three-dimensional object according to any one of claims 1 to 4,
wherein the support material is a water-soluble polymer or a water-dispersible polymer.

6. The method for producing a three-dimensional object according to claim 5,
wherein the water-soluble polymer or water-dispersible polymer is capable of forming an aqueous gel that can interact with an ionic compound to aggregate or decrease in viscosity, and
the step of removing an object of the support material ink comprises removing the object of the support material ink (b) by interaction with the ionic compound.

7. An ink set for producing a three-dimensional object, the ink set comprising:
(a) a model material ink containing a crosslinkable polymer; and
(b) a support material ink containing a support material,
wherein one of the model material ink (a) and the support material ink (b) further contains a hydrogen peroxide decomposer and the other of the model material ink (a) and the support material ink (b) further contains hydrogen peroxide or a hydrogen peroxide donor.

8. The ink set for producing a three-dimensional object according to claim 7,
wherein the hydrogen peroxide decomposer is a crosslink-forming enzyme.

9. The ink set for producing a three-dimensional object according to claim 7 or 8,
wherein the hydrogen peroxide donor is a hydrogen peroxide-producing enzyme.

10. The ink set for producing a three-dimensional object according to any one of claims 7 to 9,
wherein the crosslinkable polymer contains a phenolic hydroxy group.

11. The ink set for producing a three-dimensional object according to any one of claims 7 to 10,
wherein the support material ink (b) comprises a water-soluble polymer or water-dispersible polymer which is capable of forming an aqueous gel that can interact with an ionic compound to aggregate or decrease in viscosity.
